(19) Europäisches Patentamt
European Patent Office
Office européen des brevets

(11) EP 0 910 586 B1

(12) **EUROPÄISCHE PATENTSCHRIFT**

(45) Veröffentlichungstag und Bekanntmachung des Hinweises auf die Patenterteilung:
**05.09.2001 Patentblatt 2001/36**

(21) Anmeldenummer: **97930441.7**

(22) Anmeldetag: **30.06.1997**

(51) Int Cl.7: **C08F 2/22**

(86) Internationale Anmeldenummer:
**PCT/EP97/03397**

(87) Internationale Veröffentlichungsnummer:
**WO 98/02466 (22.01.1998 Gazette 1998/03)**

# (54) VERFAHREN ZUR HERSTELLUNG EINER WÄSSRIGEN POLYMERISATDISPERSION

PROCESS FOR PREPARING AN AQUEOUS POLYMER DISPERSION

PROCEDE DE PREPARATION D'UNE DISPERSION AQUEUSE DE POLYMERES

(84) Benannte Vertragsstaaten:
**DE ES FR GB IT NL SE**

(30) Priorität: **12.07.1996 DE 19628143**

(43) Veröffentlichungstag der Anmeldung:
**28.04.1999 Patentblatt 1999/17**

(73) Patentinhaber: **BASF AKTIENGESELLSCHAFT
67056 Ludwigshafen (DE)**

(72) Erfinder:
- **MATHAUER, Klemens
D-67061 Ludwigshafen (DE)**
- **MÄCHTLE, Walter
D-67067 Ludwigshafen (DE)**
- **MC KEE, Graham, Edmund
D-67433 Neustadt (DE)**
- **KRÖNER, Hubertus
D-67435 Neustadt (DE)**

(56) Entgegenhaltungen:
**GB-A- 2 138 830** **US-A- 4 642 323**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 910 586 B1

Printed by Jouve, 75001 PARIS (FR)

## Beschreibung

Vorliegende Erfindung betrifft ein Verfahren zur Herstellung einer wäßrigen Polymerisatdispersion durch radikalisch initiierte Polymerisation von radikalisch polymerisierbaren Verbindungen, deren individuelle Löslichkeit in Wasser unter den Bedingungen(Druck, Temperatur) der radikalisch initiierten Polymerisation wenigstens 0,001 Gew.-%, bezogen auf die jeweilige gesättigte wäßrige Lösung, beträgt (Verbindungen I), deren dispergierte Polymerisatteilchen neben den Verbindungen I noch wenigstens eine Verbindung II, deren Löslichkeit in Wasser unter den Bedingungen (Druck, Temperatur) der radikalisch initiierten Polymerisation weniger als 0,001 Gew.-%, bezogen auf die jeweilige gesättigte wäßrige Lösung beträgt, enthalten, bei dem man aus einem Gemisch, bestehend aus einem Teil der Verbindungen I und der wenigstens einen Verbindung II, eine wäßrige Öl (disperse Phase) in Wasser (kontinuierliche Phase) Emulsion I erzeugt, deren disperse Phase hauptsächlich aus Tröpfchen eines Durchmessers $\leq$ 500 nm besteht und bei dem man dem Polymerisationsgefäß unter fortwährender radikalischer Polymerisation wenigstens einen Teil der wäßrigen Emulsion I kontinuierlich zuführt.

Wäßrige Polymerisatdispersionen sind fluide Systeme, die als disperse Phase in wäßrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 5 $\mu$m, häufig hauptsächlich im Bereich von 0,01 bis 1 $\mu$m.

Ebenso wie Polymerisatlösungen beim Verdampfen des Lösungsmittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise als Bindemittel, z.B. für Anstrichfarben oder Massen zum Beschichten von Leder, Anwendung finden.

Die Herstellung wäßriger Polymerisatdispersionen erfolgt meist durch radikalische wäßrige Makroemulsionspolymerisation von radikalisch polymerisierbaren Verbindungen, bei denen es sich, von gegebenenfalls mitzuverwendenden untergeordneten Mengen an das Molekulargewicht regelnden Verbindungen (nachfolgend Molekulargewichtsregler genannt) abgesehen, normalerweise um wenigstens eine ethylenisch ungesättigte Gruppe aufweisende Monomere (nachfolgend verkürzt oft nur Monomere genannt) handelt.

Dabei werden die zu polymerisierenden Monomeren, sowie gegebenenfalls mitverwendete Molekulargewichtsregler, ohne größeren Aufwand, z.B. durch übliches Rühren, im wäßrigen Medium emulgiert und unter Zusatz von sich im wäßrigen Medium lösenden radikalischen Polymerisationsinitiatoren polymerisiert. Der Begriff Emulsion drückt dabei aus, daß ein System von zwei nicht oder nur wenig ineinander löslichen Flüssigkeiten vorliegt, in dem die Flüssigkeiten in mehr oder weniger feiner Verteilung vorliegen. Die im Überschuß vorhandene Flüssigkeit wird als kontinuierliche oder äußere Phase bezeichnet und die in der diskontinuierlichen Phase tröpfchenförmig verteilte Flüssigkeit wird disperse Phase genannt. Von einer wäßrigen Emulsion wird in der Regel dann gesprochen, wenn die wäßrige Phase die kontinuierliche Phase bildet. Zur Herstellung einer Emulsion bedarf es normalerweise des Zusatzes von Emulgatoren (Ullmanns Encyklopädie der technischen Chemie, Bd. 10, 4. Auflage, Verlag Chemie, Weinheim (1975), S. 449), die die unmittelbare Vereinigung von zwei zufällig zusammenstoßenden Flüssigkeitströpfchen der dispersen Verteilung unterbinden. Das Präfix "Makro" bringt zum Ausdruck, daß es sich bei der wäßrigen Monomerenemulsion um eine solche handelt, deren disperse Phase infolge des geringen Verteilungsaufwandes hauptsächlich aus Tröpfchen eines Durchmessers $\geq$ 1000 nm besteht.

Wesentliches Merkmal der radikalischen wäßrigen Makroemulsionspolymerisation ist nun, daß jedes der zu polymerisierenden Monomeren unter den Bedingungen (Druck, Temperatur) der radikalischen wäßrigen Makroemulsionspolymerisation in Wasser eine gewisse Löslichkeit aufweist. Dem in der äußeren wäßrigen Phase der wäßrigen Makromonomerenemulsion gelösten Polymerisationsinitiator stehen so in großer Anzahl in der selben äußeren wäßrigen Phase gelöste Monomere als Reaktionspartner zur Verfügung. Oberhalb einer kritischen Kettenlänge fallen die dabei entstehenden Oligomerradikale aus (homogene Nukleierung) und bilden Primärteilchen. Ist die Geschwindigkeit des Radikaleinfangs durch solche Primärteilchen gleich der Radikalbildungsgeschwindigkeit, ist die Polymerisatteilchenbildungsphase im wesentlichen beendet und es schließt sich die Polymerisatteilchenwachstumsphase an. In dieser diffundieren die Monomeren aus den dispers verteilten Monomertröpfchen durch die Wasserphase in die Polymerisatprimärteilchen, wo sie durch die eingefangenen Radikale polymerisiert und an das Primärteilchen gebunden werden. Die das Molekulargewicht regelnden Verbindungen verhalten sich dabei im wesentlichen wie Monomere und unterscheiden sich von den Monomeren im wesentlichen nur dadurch, daß sie normalerweise keine ethylenisch ungesättigte Doppelbindung aufweisen und daher die Polymerisationskette nicht aufrechtzuerhalten vermögen, sondern diese abbrechen.

Da die homogene Nukleierung ein stochastischer Prozeß ist, ist ihre Reproduzierbarkeit nicht befriedigend. Üblicherweise erhöht man deshalb bei der radikalischen wäßrigen Makroemulsionspolymerisation die in der wäßrigen Makromonomerenemulsion enthaltene Emulgatormenge auf Werte oberhalb der kritischen Micellbildungskonzentration und bietet so in der äußeren wäßrigen Phase in großer reproduzierbarer Zahl micellare Aufenthaltsorte an, wodurch sich die homogene Nukleierung unterdrücken läßt. Die Micellen fangen aufgrund ihrer großen Oberfläche die Oligomerradikale ein und fungieren in entsprechender Weise wie die Primärteilchen als die Polymerisationszentren (heterogene Nukleierung), wobei das verhältnis von zu polymerisierender Monomerenmenge und angebotenen Micellen im wesentlichen den Durchmesser der resultierenden, unmittelbar in disperser Verteilung befindlich entstandenen, Polymerisatteilchen bestimmt. Die seitens der großen Monomerentröpfchen angebotene Oberfläche ist im Vergleich zur Oberfläche der kleinen Micellen sehr viel kleiner und vermag im wesentlichen keine Oligomerradikale einzufangen.

Mit anderen Worten befinden sich bei der radikalischen wäßrigen Makroemulsionspolymerisation die Polymerisationsorte außerhalb der dispers verteilten Monomerentröpfchen in der wäßrigen Phase und die dispers verteilten Monomerentröpfchen fungieren lediglich als Monomerenreservoir, aus dem heraus die Polymerisationsorte durch Diffusion über die wäßrige Phase mit Monomeren versorgt werden.

Dieses Prinzip stößt jedoch dann an seine Grenzen, wenn neben mit der radikalischen wäßrigen Makroemulsionspolymerisation polymerisierbaren Monomeren Monomere wie z.B. Stearylacrylat oder Vinylstearat einpolymerisiert werden sollen, deren Löslichkeit unter Polymerisationsbedingungen in Wasser < 0,001 Gew.-%, bezogen auf die gesättigte wäßrige Lösung, beträgt (Moore schätzte die Löslichkeit von Vinylstearat in Wasser [vgl. J. Polym. Sci., Part A-1, 1967,5, 2665] auf $10^{-10}$ mol/dm$^3$). Aufgrund ihrer unzureichenden Löslichkeit in Wasser vermögen derartige Monomere nicht mit ausreichender Geschwindigkeit zu den bei der radikalischen wäßrigen Makroemulsionspolymerisation in den in der kontinuierlichen wäßrigen Phase befindlichen Polymerisationsorten transportiert werden. Sie bleiben daher als Resttröpfchen der ursprünglichen Monomerentröpfchen zurück und werden im wesentlichen nicht in die Polymerisatteilchen eingebaut. Häufig ist die Copolymerisation derartiger hydrophiler Monomere jedoch gerade erwünscht, um den Verfilmungen der resultierenden wäßrigen Polymerisatdispersion ein möglichst hydrophobes Eigenschaftsprofil zu verleihen.

Die Tatsache, daß bei der radikalischen wäßrigen Makroemulsionspolymerisation die im wäßrigen Medium dispers verteilten Monomerentröpfchen nicht die eigentlichen Polymerisationsstätten sind, macht sich auch dann nachteilig bemerkbar, wenn in die wäßrige Polymerisatdispersion in Wasser wenig lösliche organische Hilfsmittel wie z.B. Weichmacher, Verbesserer der Klebrigkeit der resultierenden Verfilmung, Filmbildehilfsmittel oder sonstige organische Additive eingearbeitet werden sollen.

Diese Substanzen sind zwar in der Regel mit der Monomerenphase verträglich, arbeitet man sie jedoch vor Beginn der radikalischen wäßrigen Makroemulsionspolymerisation in selbige ein, bleiben auch sie als Resttröpfchen der ursprünglichen Monomerentröpfchen zurück und bilden in der resultierenden wäßrigen Polymerisatdispersion separate Teilchen, die sich in ihrer Massendichte und Größe von den gebildeten Polymerisatteilchen in der Regel erheblich unterscheiden, was zu Sedimentations-, Flotations- und/oder Koagulationserscheinungen führen kann. Erwünscht wäre hingegen ein Aufenthalt dieser Additive in den dispergierten Polymerisatteilchen selbst, was sich. normalerweise durch ein nachträgliches Einarbeiten solcher Additive in die fertig gestellte wäßrige Polymerisatdispersion nicht erreichen läßt.

Den vorstehend aufgezeigten Problemen bei der radikalischen wäßrigen Makroemulsionspolymerisation läßt sich in an sich bekannter Weise dadurch abhelfen, daß man durch besondere Maßnahmen die Größe der Monomerentröpfchen in der wäßrigen Monomeren-(und gegebenenfalls Additiv)-emulsion soweit verringert, daß diese Tröpfchen überwiegend einen Durchmesser ≤ 500 nm aufweisen. Bemißt man gleichzeitig die Emulgatormenge so, daß im wäßrigen Medium im wesentlichen keine Micellbildung vorliegt, so werden die Oligomerradikale von den kleinen, eine vergleichsweise große Gesamtoberfläche aufweisenden, Monomerentröpfchen eingefangen und die Polymerisation findet in den Monomerentröpfchen selbst statt.

Abgeleitet von der geringen Größe der Monomerentröpfchen wird diese Art und Weise der radikalischen wäßrigen Emulsionspolymerisation als radikalische wäßrige Miniemulsionspolymerisation und die wäßrige Ausgangsemulsion als Monomerenminiemulsion bezeichnet. Nach der Methode der radikalischen wäßrigen Miniemulsionspolymerisation lassen sich auch besonders hydrophobe Monomere (z.B. auch Makromonomere (wie Oligopropenacrylate) = Oligomere oder Polymere, die wenigstens eine ethylenisch ungesättigte Doppelbindung aufweisen) ohne weiteres copolymerisieren. Arbeitet man sonstige hydrophobe Additive vorab der Erzeugung der wäßrigen Monomerenminiemulsion in die zu polymerisierenden Monomere mit ein, sind diese Additive in vorteilhafter Weise auch noch in den dispergierten Polymerisatteilchen in chemisch und/oder physikalisch gebundener Form enthalten.

Die vorgenannten hydrophoben Komponenten wirken sich im Verlauf der radikalischen wäßrigen Miniemulsionspolymerisation aber nicht nur nicht nachteilig aus, sondern beeinflussen deren Verlauf normalerweise positiv, in dem sie die sogenannte Ostwaldreifung mindern. Darunter wird der Prozeß verstanden, durch den die kleineren Monomerentröpfchen infolge ihres erhöhten Krümmungsradius und dem daraus resultierenden erhöhten Diffusionsdruck Monomere an die größeren Monomerentröpfchen verlieren. Ein weiterer Vorteil der radikalischen wäßrigen Miniemulsionspolymerisation liegt darin, daß sich durch die Einstellung der Tröpfchengröße der wäßrigen Monomerenminiemulsion in einfacher Weise die Größe der resultierenden Polymerisatteilchendurchmesser regulieren läßt, da letztere im wesentlichen der Tröpfchengröße entsprechen. Häufig liegen die überwiegenden Durchmesser der wäßrigen Monomerenminiemulsion oberhalb von 40 nm. Günstig ist der Tröpfchendurchmesserbereich von 100 nm bis 300 nm, bzw. von 100 nm bis 200 nm. Dadurch unterscheidet sich die radikalische wäßrige Miniemulsionspolymerisation signifikant von der radikalischen wäßrigen Suspensionspolymerisation, wo von einer wäßrigen Monomerenemulsion mit

einer Monomerentröpfchengröße ≥ 0,01 mm ausgegangen wird. Ferner müssen für die radikalische wäßrige Suspensionspolymerisation zwingend solche radikalischen Polymerisationsinitiatoren verwendet werden, die sich vorzugsweise nicht im kontinuierlichen wäßrigen Medium, sondern unmittelbar in den Monomerentröpfchen selbst auflösen. Zwar können solche als öllösliche radikalische Polymerisationsinitiatoren bezeichnete Starter auch für die radikalische wäßrige Miniemulsionspolymerisation eingesetzt werden, doch sind sie zur Durchführung derselben weniger bevorzugt. Dies liegt darin begründet, daß durch ihren bevorzugten Aufenthalt im Monomerentröpfchen die lokale Radikalkonzentration in selbigem üblicherweise vergleichsweise hoch ist. Dies fördert Abbruchreaktionen der radikalischen Kette sowie die radikalische Rekombination, wodurch das erzielbare polymere Molekulargewicht und die Polymerisationsgeschwindigkeit gemindert werden.

Vorteilhaft an der radikalischen wäßrigen Miniemulsionspolymerisation ist ferner, daß sie die Herstellung relativ emulgatorarmer (die kritische Micellbildungskonzentration muß nicht überschritten werden) feinteiliger wäßriger Polymerisatdispersionen ermöglicht.

Voraussetzung für ein ideales Gelingen einer radikalischen wäßrigen Miniemulsionspolymerisation ist, daß mehr oder weniger in allen Monomerentröpfchen der wäßrigen Monomerenminiemulsion die radikalische Polymerisation gleichzeitig ausgelöst wird. Wird diese Voraussetzung nicht erfüllt, fungieren die nicht gestarteten Monomerentröpfchen wie bei der radikalischen wäßrigen Makroemulsionspolymerisation als Monomerenreservoir für die gestarteten Monomerentröpfchen. Dadurch ändern sie ihre Zusammensetzung, was im Fall ihrer nachträglichen Initiierung zu Uneinheitlichkeiten in der Zusammensetzung der resultierenden Polymerisatteilchen führen kann. Im ungünstigsten Fall verbleiben die hydrophoben Tröpfchenbestandteile als Resttröpfchen und bedingen Koagulation oder Aufrahmen etc..

Um diesen Zusammenhängen Rechnung zu tragen, wird die radikalische wäßrige Miniemulsionspolymerisation meist batchförmig durchgeführt. D.h., die wäßrige Monomerenminiemulsion wird erzeugt, ins Polymerisationsgefäß vorgelegt, auf die Polymerisationstemperatur erwärmt und anschließend unter Rühren mit einer ausreichenden Menge an radikalischem wäßrigem Polymerisationsinitiator versetzt (vgl. z.B. P. Rajatapiti, V.L. Dimonie, M.S. El-Aasser, Polymeric Materials Science and Engineering, Proc. of the ACS Division of Polymeric Materials Science and Engineering, 71 (1994), S. 57 bis 59; Journal of Applied Polymer Science, Vol. 49, S. 633 bis 655 (1993); EP-A 520478; EP-A 401 565;).

Problematisch an allen radikalischen Polymerisationen von wenigstens eine ethylenisch ungesättigte Gruppe aufweisenden Monomeren ist jedoch, daß sie äußerst exotherm verlaufen. Aus Gründen einer sichereren Reaktionskontrolle werden sie daher ganz allgemein nur äußerst ungern batchförmig ausgeführt.
Vielmehr wird die Zulauffahrweise bevorzugt, bei der die radikalisch zu polymerisierenden Monomeren der Polymerisationszone unter fortwährender Polymerisation nach Maßgabe ihres Verbrauchs kontinuierlich zugeführt werden.

Führt man einer Polymerisationszone unter fortwährender Polymerisation eine wäßrige Monomerenminiemulsion nach Maßgabe ihres Verbrauchs kontinuierlich zu, so treffen zu einem späteren Zeitpunkt zugeführte Monomerentröpfchen stets auf bereits radikalisch initiierte Monomerentröpfchen. Erstere fungieren daher für letztere so lange als Monomerenreservoir, bis erstere selbst initiiert werden. Dies führt zu den bereits beschriebenen Nachteilen.

Die DE-A 40 25 290 versucht diesem Problem dadurch zu begegnen, daß sie einen öllöslichen Polymerisationsinitiator verwendet, der vorab der Herstellung der wäßrigen Monomerenminiemulsion in den Monomeren gelöst wird.

Eine solche Verfahrensweise ist jedoch äußerst riskant und in einer großtechnischen Realisierung kaum vertretbar.

Ein weiterer Nachteil einer reinen Monomerenminiemulsionszulauffahrweise liegt darin begründet, daß der Fließwiderstand einer wäßrigen Monomerenminiemulsion infolge der geringen Monomerentröpfchendurchmesser mit zunehmendem Gewichtsanteil der emulgierten Monomeren stark wächst. Monomerengewichtsanteile oberhalb von 50 Gew.-% sind daher kaum denkbar. Dies beschränkt in entsprechender Weise den möglichen Feststoffvolumenanteil der resultierenden wäßrigen Polymerisatdispersion.

Die Aufgabe der vorliegenden Erfindung bestand daher darin, ein Verfahren der radikalischen wäßrigen Miniemulsionspolymerisation, bei dem der Polymerisationszone unter fortwährender Polymerisation wenigstens ein Teil der wäßrigen Monomerenminiemulsion kontinuierlich zugeführt wird, zur Verfügung zu stellen, das die Nachteile der Verfahren des Standes der Technik in einem geringeren Ausmaß aufweist.

Demgemäß wurde ein Verfahren zur Herstellung einer wäßrigen Polymerisatdispersion durch radikalisch initiierte Polymerisation von radikalisch polymerisierbaren Verbindungen deren individuelle Löslichkeit in Wasser unter den Bedingungen (Druck, Temperatur) der radikalisch initiierten Polymerisation wenigstens 0,001 Gew.-%, bezogen auf die jeweilige gesättigte wäßrige Lösung, beträgt (Verbindungen I), deren dispergierte Polymerisatteilchen neben den Verbindungen I noch wenigstens eine Verbindung II, deren Löslichkeit in Wasser unter den Bedingungen (Druck, Temperatur) der radikalisch initiierten Polymerisation weniger als 0,001 Gew.-%, bezogen auf die jeweilige gesättigte wäßrige Lösung beträgt, enthalten, bei dem man aus einem Gemisch, bestehend aus einer molaren Menge B der Verbindungen I und der wenigstens einen Verbindung II, eine Öl (disperse Phase) in Wasser (kontinuierliche Phase)

Emulsion I erzeugt, deren disperse Phase hauptsächlich aus Tröpfchen eines Durchmessers ≤ 500 nm besteht und bei dem man dem Polymerisationsgefäß unter fortwährender radikalischer Polymerisation wenigstens einen Teil der wäßrigen Emulsion I als einen Zulauf I kontinuierlich zuführt, gefunden, das dadurch gekennzeichnet ist, däß man den kontinuierlichen Zulauf I durch wenigstens einen Zulauf II synchron begleitet, mit der Maßgabe, daß der wenigstens eine Zulauf II ein Zulauf einer molaren Menge A der Verbindungen I und/oder eine Öl (disperse Phase) in Wasser (kontinuierliche Phase) Emulsion II einer molaren Menge A der Verbindungen I ist, deren disperse Phase hauptsächlich aus Tröpfchen eines Durchmessers ≥ 1000 nm besteht und die molare Menge A 5 bis 300 % der molaren Menge B ist.

Als Verbindungen I kommen alle diejenigen wenigstens eine ethylenisch ungesättigte Gruppe aufweisenden Monomeren in Betracht, die üblicherweise im Rahmen der radikalischen wäßrigen Makroemulsionspolymerisation Anwendung finden. Zu diesen Monomeren zählen Olefine, wie z.B. Ethylen, vinylaromatische Monomere wie Styrol, α-Methylstyrol, o-Chlorstyrol oder Vinyltoluole, Vinyl - und Vinylidenhalogenide wie Vinyl und Vinylidenchlorid, Ester aus Vinylalkohol und 1 bis 12 C-Atome aufweisenden Monocarbonsäuren wie Vinylacetat, Vinylpropionat, Vinyl-n-butyrat, Vinyllaurat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus Allylalkohol und 1 bis 12 C-Atome aufweisenden Monocarbonsäuren wie Allylacetat, Allylpropionat, Allyl-n-butyrat und Allyllaurat, Ester aus vorzugsweise 3 bis 6 C-Atome aufweisenden α,β-monoethylenisch ungesättigten Mono- und Dicarboni säuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl- und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren ist.

Die genannten Monomeren bilden in der Regel die Hauptmonomeren, die, bezogen auf die Gesamtmenge der einzupolymerisierenden Monomeren, normalerweise einen Anteil von mehr als 50 Gew.-% auf sich vereinen. Verbindungen I, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Monomere, die üblicherweise die innere Festigkeit der Verfilmungen der wäßrigen Polymerisatdispersionen erhöhen, werden in der Regel ebenfalls nur in untergeordneten Mengen, meist 0,5 bis 10 Gew.-%, bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkanolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren, unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat.

Neben ethylenisch ungesättigte Doppelbindungen aufweisenden Monomeren können die Verbindungen I in untergeordneten Mengen, üblicherweise 0,01 bis 2 Gew.-%, bezogen auf die zu polymerisierenden Monomeren, bei radikalischen Polymerisationen das Molekulargewicht regelnde Substanzen wie Mercaptane, z.B. tert.-Dodecylmercaptan oder 3-Mercaptopropyltrimethoxysilan, umfassen.

Somit können die Verbindungen I z.B. aus

A) 80 bis 100 Gew.-Teilen wenigstens eines Monomeren aus der Gruppe umfassend Styrol, α-Methylstyrol, Vinyltoluole, Ester aus 3 bis 6-C-Atome aufweisenden α,β-monoethylenisch ungesättigten Carbonsäuren und 1 bis 12 C-Atome aufweisenden Alkanolen, Butadien sowie Vinyl- und Allylester von 1 bis 12 C-Atome aufweisenden Alkancarbonsäuren (Monomere A) und

B) 0 bis 20 Gew.-Teilen sonstigen, wenigstens eine ethylenisch ungesättigte Gruppe aufweisenden Verbindungen I (Monomere B)

sowie gegebenenfalls 0,01 bis 2 Gew.-%, bezogen auf die Summe aus den Monomeren A und B, an das Molekulargewicht regelnden Verbindungen I bestehen.

Mögliche Monomere A sind dabei z.B. n-Butylacrylat, 2-Ethylhexylacrylat, Methylmethacrylat und Styrol.

Mögliche Monomere B sind Acrylamid, Methacrylamid, Acrylsäure, Acrylnitril, Methacrylnitril, 2-Acrylamido-2-methylpropansulfonsäure, Vinylpyrrolidon, Hydroxyethylacrylat, Hydroxymethylacrylat, Hydroxypropylacrylat, Hydroxypropylmethacrylat, quaterniertes Vinylimidazol, N,N-Dialkylaminoalkyl(meth)acrylate, N,N-Dialkylaminoalkl(meth)acrylamide, Trialkylammoniumalkyl(meth)acrylate und Trialkylammoniumalkyl(meth)acrylamide. (Meth)acryl- steht hierbei verkürzend für Methacryl- oder Acryl-.

Erfindungsgemäße Ausführungsformen sind aber auch solche, bei denen die Verbindungen I zu

- 70 bis 100 Gew.-% aus Estern der Acryl- und/oder Methacrylsäure mit 1 bis 12 C-Atome aufweisenden Alkanolen und/oder Styrol,

oder zu

- 70 bis 100 Gew.-% aus Styrol und/oder Butadien,

oder zu

- 70 bis 100 Gew.-% aus Vinylchlorid und/oder Vinylidenchlorid,

oder zu

- 40 bis 100 Gew.-% aus Vinylacetat, Vinylpropionat und/oder Ethylen

zusammengesetzt sind.

Häufig erfolgt die Wahl der Monomerenzusammensetzung innerhalb der vorgenannten Zusammensetzungsraster so, daß die Glasübergangstemperaturwerte (DSC, midpoint temperature) der resultierenden Polymerisate bei alleiniger Polymerisation der Verbindungen I unterhalb von 50°C bzw. unterhalb von 30°C, oft unterhalb von 20°C und vielfach auch unterhalb von 0°C (bis zu -70°C) liegen würde.

Die Verbindungen II können ebenfalls monoethylenisch ungesättigte Gruppen aufweisen. In diesem Fall sind sie den zu polymerisierenden Monomeren zuzurechnen.

Beispiele für solche Verbindungen II sind z.B. p-tert.-Butyl-styrol, Ester aus 3 bis 6 C-Atome aufweisenden $\alpha,\beta$-monoethylenisch ungesättigten Carbonsäuren und mehr als 12 C-Atome (in der Regel bis zu 30 C-Atome) aufweisenden Alkanolen, wie z.B. Stearylacrylat. Aber auch Ester aus Vinylalkohol oder Allylalkohol und mehr als 12 C-Atome (in der Regel bis zu 30 C-Atome) aufweisenden Alkancarbonsäuren, wie z.B. Vinylstearat, sind solche Verbindungen II. Zu den copolymerisierbaren Verbindungen II zählen aber auch Makromonomere wie Oligopropenacrylat. Ganz allgemein sind Makromonomere polymere oder oligomere Verbindungen, die wenigstens eine, meist endständige, ethylenisch ungesättigte Doppelbindung aufweisen. Ihr relatives zahlenmittleres Molekulargewicht sollte für eine Verwendbarkeit als mögliche Verbindung II vorzugsweise nicht mehr als 100000 betragen. In der Regel wird dieses relative zahlenmittlere Molekulargewicht 1000 bis 50000 bzw. 2000 bis 50000 betragen. Makromonomere sind dem Fachmann bekannt. Ihre Herstellung ist beispielsweise in Makromol. Chem. 223 (1994) S. 29 bis 46 beschrieben. Ganz allgemein kommen als copolymerisierbare Verbindungen II solche Monomeren in Betracht, deren molale Löslichkeit bei 25°C und 1 bar in Wasser geringer ist als die entsprechende molale Löslicheit von Laurylacrylat (teilweise kann auch Laurylacrylat selbst noch als mögliche Verbindung II verwendet werden). Solche Monomeren sind z.B. auch das Methacryloyl-Polybutylacrylat AB-6 und das Methacryloyl-Polystyrol AS-6 der Fa. Toa Gasei Kagaku KK (JP), die beide ein zahlenmittleres relatives Molekulargewicht von 6000 aufweisen. Aber auch Polyol 130 der Hüls AG (ein stereospezifisches, niedrigviskoses Polybutadien (75 % 1,4-cis, 24 % 1,4-trans, 1 % vinyl), dessen dynamische Viskosität bei 20°C 3000 mPa·s beträgt) und Polyol 110 der Hüls AG (ein stereospezifisches, niedrigviskoses Polybutadien (75 % 1,4-cis, 24 % 1,4-trans, 1 % vinyl), dessen dynamische Viskosität bei 20°C 3000 mPa·s beträgt) bilden als Makromonomere einsetzbare Verbindungen II.

Selbstverständlich können bei entsprechend geringer Löslichkeit in Wasser aber auch keine ethylenisch ungesättigte Gruppe aufweisende höhermolekulare Verbindungen geeignete Verbindungen II bilden. Als Beispiel genannt sei Acronal® A 150 F, ein Poly-n-butylacrylat der BASF AG, dessen 50 gew.-%ige Lösung in Ethylacetat bei 23°C und 1 atm eine Viskosität (bestimmt nach ISO 3219, DIN 53 019, bei 250 $s^{-1}$) von 33 mPa·s aufweist.

Aber auch PnBA, ein Hochtemperatur (120°C) lösungs (Isopropanol) polymerisat des n-Butylacrylats mit einem bei 25°C in Isopropanol bestimmten K-Wert von 24 kommt als mögliche Verbindung II in Betracht. Der K-Wert ist eine relative Viskositätszahl, die in Analogie zur DIN 53 726 bestimmt wird. Er beinhaltet die Fließgeschwindigkeit des reinen Lösungsmittels relativ zur Fließgeschwindigkeit der 0,1 gew.-%igen Lösung des Polymerisats im selben Lösungsmittel (vgl. auch Cellulosechemie, Vol. 13 (1932), S. 58-64, und Kirk-Othmer Encyclopedia of Chemical Technology, Vol. 23, S. 967-968). Der K-Wert ist ein Maß für das mittlere Molekulargewicht eines Polymerisats. Ein hoher K-Wert entspricht dabei einem hohen mittleren Molekulargewicht.

Mögliche Verbindungen II sind aber auch Harze wie Kollophoniumharze (vgl. Ullmanns Encykl. Techn. Chem. 4. Auflage (1976), Vol. 12, S. 525-538) und Kohlenwasserstoffharze (vgl. Encycl. Polym. Sci. Eng. (1987) Vol. 7, S. 758-782), wie z.B. Kristalex F 85 der Fa. Hercules. Beispielhaft genannt sei Foral® 85 E, ein Glycerinester von hochhydriertem Kollophoniumharz (Erweichungspunkt: 86°C) der Fa. Hercules.

Aber auch sonstige wasserunlösliche, öllösliche Substanzen wie aliphatische und aromatische Kohlenwasserstoffe (z.B. Hexadekan), öllösliche Silikonverbindungen, Filmbildehilfsmittel oder Weichmacher wie Plastilit® 3060 (ein Polypropylenglykol-alkylphenylether Weichmacher) kommen als mögliche Verbindungen II (die häufig in Form von Gemischen angewendet werden) in Betracht. Selbstverständlich können als Verbindungen II auch Molekulargewichtsregler (z.B. wasserunlösliche Mercaptane) verwendet werden. Bezogen auf die Menge der erfindungsgemäß radikalisch zu polymerisierenden Monomeren wird ihr Anteil normalerweise 2 Gew.-% nicht überschreiten.

Die Herstellung der erfindungsgemäß erforderlichen wäßrigen Emulsion I kann in einfacher, an sich bekannter, Weise so erfolgen, daß man die sie erzeugenden Verbindungen I und II miteinander mischt und zunächst in einfacher Weise in eine Emulgator gelöst enthaltende wäßrige Lösung einrührt und so eine wäßrige Monomerenmakroemulsion erzeugt. Dabei kann die wäßrige Emulgatorlösung auch bereits pH-Puffersubstanzen wie Natriumhydrogencarbonat zugesetzt enthalten, die den pH-Wert des wäßrigen Mediums während der späteren radikalischen Polymerisation günstig gestalten. Als Emulgator werden vorzugsweise anionische und/oder nichtionische Emulgatoren verwendet. Prinzipiell ist aber auch die Anwendung kationischer Emulgatoren möglich. Es können alle diejenigen Emulgatoren angewendet werden, deren Anwendungsmöglichkeit für die radikalische wäßrige Makroemulsionspolymerisation bekannt ist (Öl in Wasser Emulgatoren).

Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete Emulgatoren haben sich auch Verbindungen der allgemeinen Formel I

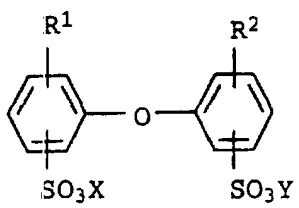

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z.B. aus der US-A 4,269,749, und im Handel erhältlich.

Die Emulgatormenge wird erfindungsgemäß zweckmäßig so gewählt, daß in der letztlich resultierenden wäßrigen Emulsion I innerhalb der wäßrigen Phase die kritische Micellbildungskonzentration der verwendeten Emulgatoren im wesentlichen nicht überschritten wird. Bezogen auf die in der wäßrigen Emulsion I enthaltene Menge an Verbindungen I und II liegt diese Emulgatormenge in der Regel im Bereich von 0,1 bis 5 Gew.-%.

Da die vorgenannten Emulgatoren auch die disperse Verteilung in der letztlich resultierenden wäßrigen Polymerisatdispersion stabilisieren, können ihnen zusätzlich Schutzkolloide an die Seite gegeben werden. Diese vermögen die Oberflächenspannung von Wasser kaum zu verringern und weisen in der Regel oberhalb von 1000 liegende relative Molekulargewichte auf. Mögliche Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420.

Die wie beschrieben erhältliche wäßrige Monomerenmakroemulsion kann anschließend in üblicher Weise zur erfindungsgemäß benötigten wäßrigen Emulsion I homogenisiert werden (vgl. P.L. Tang, E.D. Sudol, C.A. Silebi und M.S. El-Aasser in Journal of Applied Polymer Science, Vol. 43, S. 1059-1066 [1991]). In der Regel werden dazu Hochdruckhomogenisatoren angewendet. Die Feinverteilung der Komponenten wird in diesen Maschinen durch einen hohen lokalen Energieeintrag erzielt. Zwei Varianten haben sich diesbezüglich besonders bewährt.

Bei der ersten Variante wird die wäßrige Monomerenmakroemulsion über eine Kolbenpumpe auf über 1000 bar verdichtet und anschließend durch einen engen Spalt entspannt. Die Wirkung beruht hier auf einem Zusammenspiel von hohen Scher- und Druck-gradienten und Kavitation im Spalt. Ein Beispiel für einen Hochdruckhomogenisator, der nach diesem Prinzip funktioniert, ist der Niro-Soavi Hochdruckhomogenisator Typ NS1001L Panda.

Bei der zweiten Variante wird die verdichtete wäßrige Monomerenmakroemulsion über zwei gegeneinander gerichtete Düsen in eine Mischkammer entspannt. Die Feinverteilungswirkung ist hier vor allem von den hydrodynamischen Verhältnissen in der Mischkammer abhängig. Ein Beispiel für diesen Homogenisatortyp ist der Microfluidizer Typ M 120 E der Microfluidics Corp.. In diesem Hochdruckhomogenisator wird die wäßrige Monomerenmakroemulsion mittels einer pneumatisch betriebenen Kolbenpumpe auf Drücke von bis zu 1200 bar komprimiert und über eine sogenannte "interaction chamber" entspannt. In der "interaction chamber" wird der Emulsionsstrahl in einem Mikrokanalsystem in zwei Strahlen aufgeteilt, die unter 180° aufeinandergeführt werden. Ein weiteres Beispiel für einen nach dieser Homogenisierungsart arbeitenden Homogenisator ist der Nanojet Typ Expo der Nanojet Engineering GmbH. Allerdings sind bei Nanojet anstatt eines festen Kanalsystems zwei Homogenisierventile eingebaut, die mechanisch verstellt werden können.

Neben den ebenda genannten Prinzipien kann die Homogenisierung aber z.B. auch durch Anwendung von Ultraschall (z.B. Branson Sonifier II 450) erzeugt werden. Die Feinverteilung beruht hier auf Kavitationsmechanismen. Die Qualität der im Schallfeld erzeugten wäßrigen Emulsion I hängt dabei nicht nur von der eingebrachten Schallleistung, sondern auch noch von anderen Faktoren wie z.B. der Intensitätsverteilung des Ultraschalls in der Mischkammer, der Verweilzeit, der Temperatur und den physikalischen Eigenschaften der zu emulgierenden Stoffe, beispielsweise von der Zähigkeit, der Grenzflächenspannung und dem Dampfdruck ab. Die resultierende Tröpfchengröße hängt dabei u.a. von der Konzentration des Emulgators sowie von der bei der Homogenisierung eingetragenen Energie ab und ist z.B. durch entsprechende Veränderung des Homogenisierungsdrucks bzw. der entsprechenden Ultraschallenergie gezielt einstellbar.

Die mittlere Größe der Tröpfchen der dispersen Phase der erfindungsgemäß zu verwendenden wäßrigen Emulsion I läßt sich nach dem Prinzip der quasielastichen dynamischen Lichtstreuung bestimmen (der sogenannte z-mittlere Tröpfchendurchmesser $\bar{d}_z$ der unimodalen Analyse der Autokorrelationsfunktion). In den Beispielen dieser Schrift wurde dazu ein Coulter N4 Plus Particle Analyser der Fa. Coulter Scientific Instruments verwendet (1 bar, 25°C). Die Messungen wurden an verdünnten wäßrigen Emulsionen I vorgenommen, deren Gehalt an nichtwäßrigen Bestandteilen 0,01 Gew.-% betrug. Die Verdünnung wurde dabei mittels Wasser vorgenommen, das zuvor mit den in der wäßrigen Emulsion enthaltenen Verbindungen I und II gesättigt worden war. Letztere Maßnahme soll verhindern, daß mit der Verdünnung eine Änderung der Tröpfchendurchmesser einhergeht.

Erfindungsgemäß betragen die solchermaßen ermittelten Werte für $\bar{d}_z$ normalerweise $\leq 500$ nm, häufig $\leq 400$ nm. Günstig ist erfindungsgemäß der $\bar{d}_z$-Bereich von 100 nm bis 300 nm bzw. von 100 nm bis 200 nm. Im Normalfall beträgt $\bar{d}_z$ der erfindungsgemäß einzusetzenden wäßrigen Emulsion I $\geq 40$ nm.

Normalerweise enthalten die erfindungsgemäß zu verwendenden wäßrigen Emulsionen I, bezogen auf die enthaltenen Verbindungen I, wenigstens 0,5 Gew.-% an Verbindungen II. Eine obere Schranke für die in dieser Weise bezogene Menge an enthaltenen Verbindungen II besteht nicht. Diese Aussage gilt insbesondere dann, wenn es sich bei den verwendeten Verbindungen II ausschließlich um solche handelt, die selbst wenigstens eine radikalisch polymerisierbare ungesättigte Gruppe aufweisen. Im Regelfall wird der so bezogene Gehalt an Verbindungen II jedoch 200 Gew.-% nicht übersteigen und häufig $\leq 100$ Gew.-% betragen. Erfindungsgemäße Ausführungsformen sind auch solche, in denen, der wie vorstehend bezogene Gehalt an Verbindungen II 1 bis 50 Gew.-%, oder 2 bis 30 Gew.-%, oder 5 bis 15 Gew.-% beträgt.

Normalerweise beträgt der Gesamtgehalt an Verbindungen I und II in der wäßrigen Emulsion I nicht mehr als 50 Gew.-%, bezogen auf die wäßrige Emulsion I. Mit einem höheren Gesamtgehalt an Verbindungen I und II geht in der Regel ein nicht angemessener Fließwiderstand einher, dessen Verringerung eine polydisperse (im einfachsten Fall bimodale) Einstellung der Tröpfchendurchmesserverteilung der dispersen Phase erfordert.

Als Bestandteil des Zulaufs II kommen prinzipiell alle diejenigen Verbindungen I in Betracht, die auch Bestandteil der wäßrigen Emulsion I sein können. In der Regel wählt man die im Zulauf II enthaltenen Verbindungen I jedoch so aus, daß ihre individuelle molale Löslichkeit in Wasser unter den Polymerisationsbedingungen größer ist als die entsprechende Wasserlöslichkeit der unter Polymerisationsbedingungen am schlechtesten wasserlöslichen Verbindung I der wäßrigen Emulsion I. Vorzugsweise sollte die individuelle molale Löslichkeit der Verbindungen I des Zulaufs II unter den Polymerisationsbedingungen in Wasser jedoch schlechter sein als in den dispers verteilten Tröpfchen der wäßrigen Emulsion I.

Mit Vorteil umfaßt der Zulauf II ausschließlich Verbindungen I. Diese Ausführungsvariante des erfindungsgemäßen Verfahrens ist insbesondere dann günstig, wenn ein hoher Feststoffgehalt der resultierenden wäßrigen Polymerisatdispersion angestrebt wird. Prinzipiell kommt als Zulauf II aber auch eine wäßrige Monomerenmakroemulsion der Verbindungen I in Betracht. Im letzteren Fall können alle diejenigen Emulgatoren eingesetzt werden, die bereits im Zusammenhang mit der wäßrigen Emulsion I genannt wurden. Erfindungsgemäß können z.B. bis zu 10 Gew.-%, bis zu 20 Gew.-%, oder bis zu 30 Gew.-%, oder bis zu 40 Gew.-%, oder bis zu 50 Gew.-%, oder bis zu 60 Gew.-%, oder bis zu 70 Gew.-%, oder bis zu 80 Gew.-%, oder bis zu 90 Gew.-% oder mehr oder die Gesamtmenge der wäßrigen Emulsion I dem Polymerisationsgefäß als wenigstens ein Zulauf I kontinuierlich zugeführt werden.

In einfachster Weise kann das erfindungsgemäße Verfahren so durchgeführt werden, daß man ins Polymerisationsgefäß etwas Wasser vorlegt, das vorgelegte Wasser auf die Polymerisationstemperatur erwärmt und anschließend über räumlich getrennte Zuläufe die wäßrige Emulsion I sowie den radikalischen Polymerisationsinitiator, in der Regel als wäßrige Lösung, unter Aufrechterhaltung der Polymerisation dem Polymerisationsgefäß kontinuierlich zuführt. Mit Vorteil wird man in diesem Fall den erfindungsgemäß wesentlichen Zulauf II synchron zur wäßrigen Emulsion I zuführen.

Häufig wird man das erfindungsgemäße Verfahren jedoch so durchführen, daß man bis zu 50 Gew.-%, oder bis zu 30 Gew.-%, oder bis zu 15 Gew.-% der wäßrigen Emulsion I, gegebenenfalls unter Zusatz von Wasser, ins Polymerisationsgefäß vorlegt, die Vorlage auf die Polymerisationstemperatur erwärmt, radikalischen Polymerisationsinitiator zusetzt, das resultierende Gemisch anpolymerisiert und anschließend die Restmenge der wäßrigen Emulsion I unter Aufrechterhaltung der Polymerisation ins Polymerisationsgefäß kontinuierlich zuführt, und diese Zufuhr durch eine vorzugsweise synchrone kontinuierliche Zufuhr an Polymerisationsinitiator sowie eine synchrone Zufuhr des Zulaufs II begleitet. Im Prinzip kann aber auch die Gesamtmenge an radikalischem Polymerisationsinitiator ins Polymerisationsgefäß vorgelegt werden.

Üblicherweise wird die molare Gesamtmenge an Verbindungen I, die als Bestandteil des Zulaufs II eingesetzt werden (molare Menge A), ≤ der molaren Gesamtmenge an Verbindungen I betragen, die als Bestandteil der wäßrigen Emulsion I eingesetzt werden (molare Menge B). Sie kann jedoch auch das zwei- und mehrfache dieser Menge betragen. Erfindungsgemäße Ausführungsformen sind demnach solche Verfahren, bei denen die molare Menge A bis zu 300 % oder bis zu 100 %, oder bis zu 75 %, oder bis zu 50 % oder bis zu 25 % oder bis zu 10 % der molaren Menge B beträgt. Die Untergrenze liegt oft bei 5 %.

Als radikalische Polymerisationsinitiatoren kommen prinzipiell alle diejenigen in Betracht, die in der Lage sind, eine radikalische Polymerisation auszulösen. Es kann sich dabei sowohl um Peroxide, Hydroperoxide als auch um Azoverbindungen handeln. Sie können sowohl öllöslich als auch wasserlöslich sein.

Vorzugsweise werden für das erfindungsgemäße Verfahren radikalische Polymerisationsinitiatoren mit erhöhter Wasserlöslichkeit eingesetzt. Beispiele für solche Polymerisationsinitiatoren sind z.B. die Peroxodischwefelsäure und ihre Ammonium- und Alkalimetallsalze sowie Wasserstoffperoxid und tert.-Butylhydroperoxid. Selbstverständlich können als solche wasserlöslichen radikalischen Polymerisationsinitiatoren auch kombinierte Systeme, die aus wenigstens einem Reduktionsmittel und wenigstens einem Peroxid und/oder Hydroperoxid zusammengesetzt sind, verwendet werden. Beispiele für solche Kombinationen sind z.B. tert.-Butylhydroperoxid/Natriummetallsalz der Hydroxymethansulfinsäure sowie Wasserstoffperoxid/Ascorbinsäure. Häufig umfassen die kombinierten Systeme zusätzlich eine geringe Menge einer im wäßrigen Medium löslichen Metallverbindung, deren metallische Komponente in mehreren Wertigkeitsstufen auftreten kann. Beispiele für solche Systeme sind z.B. Ascorbinsäure/Eisen(II)-sulfat/Wasserstoffperoxid oder Natriumsulfit/Eisen(II)sulfat/Wasserstoffperoxid. Selbstverständlich kann in den vorgenannten Systemen anstelle von Ascorbinsäure auch das Natriummetallsalz der Hydroxymethansulfinsäure, Natriumhydrogensulfit oder Natriummetallbisulfit eingesetzt werden. Ferner können in den vorgenannten Systemen anstelle von Wasserstoffperoxid tert.-Butylhydroperoxid oder Alkalimetallperoxidisulfate und/oder Ammoniumperoxidisulfate angewendet werden. Anstelle eines wasserlöslichen Eisen(II)-salzes wird vielfach eine Kombination aus wasserlöslichen Fe/V-Salzen benutzt.

Bezogen auf die radikalisch zu polymerisierenden Monomeren werden üblicherweise 0,1 bis 10 Gew.-%, häufig 0,5 bis 5 Gew.-% an radikalischen Polymerisationsinitiatoren verwendet.

Die Polymerisationstemperatur richtet sich beim erfindungsgemäßen Verfahren in der Regel nach der Zerfallstemperatur des eingesetzten radikalischen Polymerisationsinitiators. Redoxinitiatorsysteme zerfallen in der Regel bei besonders niedrigen Temperaturen. Typische Polymerisationstemperaturen betragen 0°C bis 95°C, häufig 30°C bis 90°C und oft 50°C bis 85°C. Bei Anwendung von erhöhtem Druck kann die Polymerisationstemperatur auch bis

zu 120°C und mehr betragen. Üblicherweise wird bei Normaldruck (1 bar) polymerisiert.

Die Zuläufe können im Rahmen des erfindungsgemäßen Verfahrens dem Polymerisationsreaktor von oben, von der Seite oder durch den Reaktorboden zugeführt werden.

Die Vorteilhaftigkeit der erfindungsgemäßen Verfahrensweise wird ohne Anspruch auf Gültigkeit darauf zurückgeführt, daß die nichtinitiierten Monomerentröpfchen zwar immer noch wie ein Monomerenreservoir Monomere an die wäßrige Phase abgeben, doch werden diese Monomeren kaum noch durch radikalische Polymerisation in den initiierten Monomerentröpfchen verbraucht, da in Form des Zulaufs II in der wäßrigen Phase ein Überangebot radikalisch polymerisierbarer Verbindungen I, die nicht den Monomerenmini-emulsionströpfchen entstammen, eingestellt wird. Die mögliche Reservoirfunktion der nichtinitiierten Monomerenminiemulsions-tröpfchen wird daher nicht in Anspruch genommen, wodurch ein einheitlicheres Produkt resultiert.

Ein weiterer Vorteil des erfindungsgemäßen Verfahrens ist die Möglichkeit der Realisierung erhöhter Polymerisatvolumenanteile in der wäßrigen Polymerisatdispersion (bis zu 60 oder 70 Vol.-% u. mehr). Bezüglich derselben erweist es sich als Vorteil, daß das erfindungsgemäße Verfahren in der Regel zu, bezüglich der Verteilungsfunktion der Durchmesser der dispergierten Polymerisatteilchen, polydispersen oder polymodalen wäßrigen Polymerisatdispersionen führt.

Beispiele

A) Herstellung von für das erfindungsgemäße Verfahren geeigneten wäßrigen Emulsionen I a) bis t)

Allgemeine Herstellvorschrift:
Eine wäßrige Lösung aus Wasser, 15 gew.-%iger wäßriger Natriumlaurylsulfatlösung und gegebenenfalls Natriumhydrogencarbonat wurde vorgelegt. Zu dieser wäßrigen Lösung 1 wurde unter Rühren ein aus Verbindungen I und II bestehender Zulauf 1 zugeführt und das dabei resultierende Gemisch nach beendeter Zufuhr noch 10 min gerührt. Die dabei resultierenden wäßrigen Monomerenmakroemulsionen wurden anschließend in Anwendung einer der nachfolgenden Homogenisationsweisen A bis D zu einer wäßrigen Monomerenmikroemulsion homogenisiert:

A: Hochdruckhomogenisator Niro Soavi, Typ NS 1001 L Panda; zur Homogenisierung der wäßrigen Monomerenmakroemulsionen wurde jeweils ein Durchlauf bei 850 bar durchgeführt;

B: Microfluidizer, Typ M 120 der Fa. Microfluidics Corp.; zur Homogenisierung wurde jeweils ein Durchlauf bei 1000 bar durchgeführt;

C: Hochdruckhomogenisator Nanojet, Modell Expo; zur Homogenisierung wurde jeweils ein Durchlauf bei 850 bar durchgeführt;

D: Ultraschall (Branson Sonifier II 450); 1 Liter der wäßrigen Monomerenmakroemulsion wurde unter Rühren jeweils 5 min mit den Einstellungen Duty Cycle 25 %, Output Control 10 und jeweils 20 min bei Duty Cycle 100 % und Output Control 10 beschallt.

Zur Charakterisierung der erhaltenen wäßrigen Monomerenminiemulsion wurde deren $\bar{d}_z$ [nm] bestimmt.

Tabelle 1 zeigt die erhaltenen Ergebnisse sowie die Zusammensetzung (alle Angaben erfolgen in Gramm) der jeweils verwendeten Lösungen 1 und Zuläufe 2.
Ferner weist die Tabelle 1 den angewandten Homogenisator aus.

Tabelle 1

Wäßrige Monomerenminiemulsionen

| | a | b | c | d | e | f | g | h | i | j | k | l | m | n | o | p | q | r | s | t |
|---|---|---|---|---|---|---|---|---|---|---|---|---|---|---|---|---|---|---|---|---|
| Lösung 1 | | | | | | | | | | | | | | | | | | | | |
| Natriumhydrogen-carbonat | 0,64 | 0,64 | 0,64 | 0,64 | 0,45 | 0,45 | 0,65 | 0,65 | 0,65 | 0,65 | 0,65 | 0,65 | 0,65 | --- | --- | 0,56 | 0,56 | 0,56 | 0,56 | 0,4 |
| 15 gew.-%ige wäßrige Natrium-laurylsulfatlösung | 14,1 | 14,1 | 14,1 | 14,1 | 9,8 | 9,8 | 14,1 | 14,1 | 14,1 | 14,1 | 14,1 | 14,1 | 14,1 | 1,6 | 1,6 | 11,2 | 11,2 | 11,2 | 11,2 | 8 |
| Wasser | 1421 | 1421 | 1476 | 1504 | 968 | 967 | 1393 | 1393 | 1393 | 1393 | 1477 | 1421 | 1477 | 164,4 | 159,6 | 1227 | 1227 | 1227 | 1227 | 800 |
| Zulauf 1 | | | | | | | | | | | | | | | | | | | | |
| I: n-Butylacrylat | 360 | 360 | 360 | 360 | --- | --- | 288 | 252 | 216 | 180 | 360 | 360 | 360 | 40 | 38,8 | 280 | --- | --- | 280 | 160 |
| Styrol | --- | --- | --- | --- | 200 | 125 | --- | --- | --- | --- | --- | --- | --- | --- | --- | --- | 280 | 280 | --- | --- |
| II: Hexadekan | 7,2 | --- | --- | --- | --- | --- | --- | --- | --- | --- | --- | --- | --- | --- | --- | --- | --- | --- | --- | --- |
| PnBA | --- | 14,4 | 21,6 | 28,0 | --- | --- | --- | --- | --- | --- | --- | --- | --- | --- | --- | --- | --- | --- | --- | --- |
| Stearylacrylat | --- | --- | --- | --- | 50 | 125 | 72 | 108 | 144 | 180 | --- | --- | --- | --- | --- | --- | --- | --- | --- | 40 |
| Laurylacrylat | --- | --- | --- | --- | --- | --- | --- | --- | --- | --- | --- | --- | --- | --- | 1,2 | --- | --- | --- | --- | --- |
| Polyöl 110 | --- | --- | --- | --- | --- | --- | --- | --- | --- | --- | 21,6 | --- | --- | --- | --- | --- | --- | --- | --- | --- |
| Polyöl 130 | --- | --- | --- | --- | --- | --- | --- | --- | --- | --- | --- | 7,2 | 21,6 | --- | --- | --- | --- | --- | --- | --- |
| Plastilit 3060 | --- | --- | --- | --- | --- | --- | --- | --- | --- | --- | --- | --- | --- | 1,2 | --- | --- | --- | --- | --- | --- |
| AB-6 | --- | --- | --- | --- | --- | --- | --- | --- | --- | --- | --- | --- | --- | --- | --- | 28 | 28 | --- | --- | --- |
| AS-6 | --- | --- | --- | --- | --- | --- | --- | --- | --- | --- | --- | --- | --- | --- | --- | --- | --- | 28 | 28 | --- |
| | | | | | | | | | | | | | | | | | | | | |
| Homogenisierung | B | B | B | B | B | B | C | C | C | C | A | A | A | C | C | C | C | C | C | D |
| $\bar{d}_z$ | 200 | 430 | 93 | 101 | 158 | 163 | 129 | 141 | 151 | 175 | 166 | 163 | 137 | 246 | 214 | 133 | 211 | 160 | 159 | 155 |

B) Erfindungsgemäße und nicht erfindungsgemäße Herstellung wäßriger Polymerisatdispersionen

Allgemeine Herstellvorschrift:

Zunächst wurden wie in Bsp. A) wäßrige Emulsionen I erzeugt. In allen Fällen erfolgte die Homogenisierung nach der Homogenisierungsweise A.

Dann wurde ins Polymerisationsgefäß eine bestimmte Menge Wasser vorgelegt und auf 85°C erhitzt.

Anschließend wurden der erhitzten Vorlage auf einmal 10 Gew.-% der wäßrigen Emulsion I sowie 15 Gew.-% eines Zulaufs 2 (wäßrige Natriumperoxodisulfatlösung als radikalischer Polymerisationsinitiator) zugegeben und das resultierende Gemisch 15 min bei 85°C polymerisiert.

Anschließend wurden dem Polymerisationsgefäß zeitgleich beginnend die Restmenge der wäßrigen Emulsion I als Zulauf I (innerhalb von 2 h), die Restmenge des Zulaufs 2 (innerhalb von 2 h und 30 min) sowie gegebenenfalls ein aus Verbindungen I bestehender Zulauf II (innerhalb von 2 h) unter Aufrechterhaltung der 85°C über räumlich getrennte Zuläufe kontinuierlich zugeführt. Nach Beendigung der Zuläufe wurde das Reaktionsgemisch noch 1 h unter Rühren bei 85°C gehalten und anschließend auf 25°C abgekühlt.

Zur Charakterisierung der resultierenden wäßrigen Polymerisatdispersionen wurde deren Feststoffgehalt (FG, in Gew.-%, bezogen auf wäßrige Polymerisatdispersion), der pH-Wert des wäßrigen Dispergiermediums, der sogenannte LD-Wert (das ist die Lichtdurchlässigkeit einer auf einen FG von 0,01 Gew.-% verdünnten wäßrigen Polymerisatdispersion (ermittelt bei einer Schichtdicke von 2,5 cm) relativ zur Lichtdurchlässigkeit von reinem Wasser (LD-Wert = 100)), die enthaltene Menge an Makrokoagulat KG (prozentualer Gewichtsanteil des bei Filtration der wäßrigen Polymerisatdispersion durch einen Filter von 125 µm Maschenweite verbleibenden Rückstandes, bezogen auf den Feststoffgehalt der wäßrigen Polymerisatdispersion) und die nach vorgenannter Filtration noch enthaltende Menge an Stippen S (Mikrokoagulat; die Mengenbestimmung erfolgte durch optische Beurteilung eines eine Trockendicke von 60 µm aufweisenden Films der wäßrigen Polymerisatdispersion, wobei die Verfilmung 10°C oberhalb deren Mindestfilmbildetemperatur (DIN 53 787) jedoch nicht unter 20°C erfolgte; 1 = stippenfrei, 5 = schlechteste Beurteilung) bestimmt.

Als Maß zur Charakterisierung der Breite der Durchmesserverteilung der dispergierten Polymerisatteilchen wurde der Quotient Q = $d_{90}$-$d_{10}$/$d_{50}$ bestimmt, wobei $d_m$ der Durchmesser ist, der von m Gew.-% der dispergierten Polymerisatteilchen nicht überschritten wird. Als Maß für die chemische Einheitlichkeit der dispergierten Polymerisatteilchen wurde deren Massendichteverteilung untersucht. Sowohl die Untersuchungen der Polymerisatteilchendurchmesserverteilung als auch der Massendichteverteilung erfolgten in der Analytischen Ultrazentrifuge unter Einbezug der $H_2O/D_2O$-Sedimentationsanalyse sowie unter Anwendung dynamischer Dichtegradienten. Eine ausführliche Beschreibung der Meßmethoden durch W. Mächtle findet sich in "Analytical Ultracentrifugation in Biochemistry and Polymer Science, S.E. Harding et al (Eds.), Royal Society of Chemistry, Cambridge, England (1992), Chapter 10".

Nachfolgend sind die angewandten Zusammensetzungen (Mengenangaben in Gramm) sowie die erhaltenen Ergebnisse im einzelnen aufgeführt.

D1:

| | |
|---|---|
| Vorlage: | 300 g Wasser; |
| Lösung 1: | 738,4 g Wasser, 1,6 g Natriumhydrogencarbonat, 32 g einer 15 gew.-%igen wäßrigen Natriumlaurylsulfatlösung; |
| Zulauf 1: | 400 g n-Butylacrylat (I), 160 g Stearylacrylat (II); |
| Zulauf 2: | 150 g Wasser, 4 g Natriumperoxodisulfat; |
| Zulauf II: | 240 g n-Butylacrylat (I); |
| FG: | 39 Gew.-%; |
| pH: | : 3,0; |
| LD: | 58; |
| $\bar{d}_z$ | (wäßrige Emulsion I): 177 nm; |
| $\bar{d}_z$ | (resultierende Polymerisatdispersion D1): 235 nm; |
| KG: | 0 Gew.-%; |
| S: | 1; |
| Q: | 0,986; |

Die Massendichte der dispergierten Polymerisatteilchen $d_4^{25}$ erstreckt sich über den Bereich von 1,019 g/cm$^3$ bis 1,044 g/cm$^3$.

Dies weist aus, daß im Verlauf der Polymerisation weder reines Poly-n-butylacrylat ($d_4^{25}$ = 1,06 g/cm$^3$) noch reines Polystearylacrylat ($d_4^{25}$ = 0,94 g/cm$^3$) gebildet wurde.
KG- und S-Wert weisen aus, daß D1 im wesentlichen koagulatfrei war.

VD1: Vorlage, Lösung 1 und Zulauf 2 wie für D1. Zulauf 1 bestand jedoch aus 640 g n-Butylacrylat (I) und 160 g Stearylacrylat (II); dafür wurde kein Zulauf II angewendet.
FG: 37,6 Gew.-%;
pH: 3,3;
LD: 28;
$\bar{d}_z$ (wäßrige Emulsion I): 344 nm;
$\bar{d}_z$ (resultierende Polymerisatdispersion VD1): 287 nm;
KG: 8,5 Gew.-%;
S: 3;

Die wäßrige Polymerisatdispersion VD1 wies in erheblichem Umfang flotierendes Koagulat auf, das gemäß DSC-(Differential Scanning Calorimetry)-Analyse aus reinem Polystearylacrylat bestand. Die Bruttozusammensetzungen von D1 und VD1 sind identisch.

D2: Vorlage, Lösung 1 und Zuläufe 2, II wie für D1. Zulauf 1 bestand jedoch aus 280 g n-Butylacrylat (I) und 280 g Stearylacrylat (II);
FG: 39,4 Gew.-%;
pH: 2,9;
LD: 52;
$\bar{d}_z$ (wäßrige Emulsion I): 197 nm;
$\bar{d}_z$ (resultierende Polymerisatdispersion D2): 234 nm;
KG: 2 Gew.-%;
S: 1;
Q: 1,437;
$d_4^{25}$ : 0,975 g/cm$^3$ bis 1,045 g/cm$^3$;
D2 unterscheidet sich von D1 lediglich durch einen erhöhten Anteil an Stearylacrylat. Bildung von Polystearylacrylat wurde dennoch nicht beobachtet.
VD2: Wie D2, Zulauf II wurde jedoch ersatzlos weggelassen.
FG: 31,8 Gew.-%;
pH: 3,7;
LD: 39;
$\bar{d}_z$ (wäßrige Emulsion I): 223 nm;
$\bar{d}_z$ (resultierende Polymerisatdispersion VD2): 228 nm;
KG: 3,8 Gew.-%;
S: 3;

Die wäßrige Polymerisatdispersion VD2 wies wie VD1 in erheblichem Umfang flotierendes Polystearylacrylat auf.

VD3: Vorlage: 200 g Wasser;

Lösung 1: 838,4 g Wasser, 1,6 g Natriumhydrogencarbonat, 32 g einer 15 gew.-%igen wäßrigen Natriumlaurylsulfatlösung;

Zulauf 1: 520 g n-Butylacrylat (I), 280 g Stearylacrylat (II);

Zulauf 2: 150 g Wasser, 4 g Natriumperoxodisulfat;

Zulauf II:

FG: 39.2 Gew.-%:
pH: 3,2;
LD: 31;
$\bar{d}_z$ (wäßrige Emulsion I): 253 nm;
$\bar{d}_z$ (resultierende Polymerisatdispersion VD3): 258 nm;
KG: 5,0 Gew.-%;

S: 3;

Die wäßrige Polymerisatdispersion VD3 wies die gleiche Bruttozusammensetzung wie D2 auf, zeigte im Unterschied zu D2 jedoch erhebliche Mengen an flotierendem Polystearylacrylat.

| | |
|---|---|
| D3: Vorlage: | 300 g Wasser; |
| Lösung 1: | 834,4 g Wasser, 1,6 g Natriumhydrogencarbonat, 32 g einer 15 gew.-%igen wäßrigen Natriumlaurylsulfatlösung; |
| Zulauf 1: | 560 g Styrol (I); 64 g PnBA (II); |
| Zulauf 2: | 150 g Wasser, 4 g Natriumperoxodisulfat; |
| Zulauf II: | 240 g Styrol (I); |
| FG: : | 39,2 Gew.-%; |
| pH: | 6,5; |
| LD: | 20; |
| $\bar{d}_z$ | (wäßrige Emulsion I): 210 nm; |
| $\bar{d}_z$ | (resultierende Polymerisatdispersion): 245 nm; |
| KG: | 1,6 Gew.-%; |
| S: | 2; |
| $d_4^{25}$: | 1,050 g/cm$^3$ bis 1,054 g/cm$^3$; |

Die Polymerisatteilchendurchmesserverteilung war ausgeprägt bimodal. Die $d_4^{25}$-Werte von PnBA und Polystyrol betragen 1,05 bzw. 1,06 g/cm$^3$.

| | |
|---|---|
| VD4: | Vorlage, Lösung 1 und Zulauf 2 wie für D3. Zulauf 1 bestand jedoch aus 800 g Styrol (I) und 64 g PnBA; dafür wurde kein Zulauf II angewendet: |
| FG: | 39 Gew.-%; |
| pH: | 7,2; |
| LD: | 16; |
| $\bar{d}_z$ | (wäßrige Emulsion I): 237 nm; |
| $\bar{d}_z$ | (resultierende Polymerisatdispersion VD4): 258 nm; |
| KG: | 3,0 Gew.-%; |
| S: | 3; |

Gegenüber D3 wies VD4 einen erhöhten Anteil an Makro- und Mikrokoagulat auf.

| | |
|---|---|
| D4: Vorlage: | 300 g Wasser; |
| Lösung 1: | 834,4 g Wasser, 1,6 g Natriumhydrogencarbonat, 32 g einer 15 gew.-%igen wäßrigen Natriumlaurylsulfatlösung; |
| Zulauf 1: | 560 g Styrol (I); 64 g AB-6 (II); |
| Zulauf 2: | 150 g Wasser, 4 g Natriumperoxodisulfat; |
| Zulauf II: | 240 g Styrol (I); |
| FG: | 39,4 Gew.-%; |
| pH : | 5.1: |
| LD: | 18; |
| $\bar{d}_z$ | (wäßrige Emulsion I): 170 nm; |
| $\bar{d}_z$ | (resultierende Polymerisatdispersion) : 239 nm; |
| KG: | 0,9 Gew.-%; |
| S: | 2; |
| VD5 : | :Vorlage, Lösung 1 und Zulauf 2 wie für D4. Zulauf 1 bestand jedoch aus 800 g Styrol (I) und 64 g AB-6; dafür wurde kein Zulauf II angewendet; |
| FG: | 39,1 Gew.-%; |
| pH: | 6.2; |
| LD: | 11; |
| $\bar{d}_z$ | (wäßrige Emulsion I): 282 nm; |
| $\bar{d}_z$ | (resultierende Polymerisatdispersion): 260 nm; |
| KG: | 3,1 Gew.-%; |
| S: | 2; |

Gegenüber D4 wies VD5 einen erhöhten Anteil an Makrokoagulat auf. Die DSC-Analyse des Makrokoagulats wies eine deutliche Anreicherung an AB-6 im Vergleich zum AB-6 Gehalt des aus der filtrierten wäßrigen Polymerisatdispersion gebildeten Films aus.

Die nachfolgende Tabelle 2 weist zur Demonstration der breiten Anwendbarkeit der erfindungsgemäßen Verfahrens-weise sowie zum Nachweis der Möglichkeit des Erhalts hoher Feststoffgehalte weitere Ausführungsbeispiele D5 bis D15 aus. Die für die einzelnen Größen verwendeten Einheiten entsprechen den in den vorhergehenden Beispielen verwendeten Einheiten.

Tabelle 2

| | D5 | D6 | D7 | D8 | D9 | D10 | D11 | D12 | D13 | D14 | D15 |
|---|---|---|---|---|---|---|---|---|---|---|---|
| | | | | | | | | | | | |
| Vorlage an Wasser | 300 | 300 | 300 | 300 | 300 | 300 | 150 | 150 | 150 | 300 | 300 |
| Lösung 1 | | | | | | | | | | | |
| Natriumhydrogen-carbonat | 3,6 | 1,6 | 1,6 | 1,6 | 1,6 | 3,6 | 0,8 | 0,8 | 0,8 | 1,6 | 1,6 |
| 15 gew.-%ige wäßrige Natriumlaurylsulfatlösung | 72 | --- | 32 | 32 | 32 | 72 | 16 | 16 | 16 | 32 | 32 |
| Dowfax 2A1 | --- | 17,8 | --- | --- | --- | --- | --- | --- | --- | --- | --- |
| Wasser | 704,4 | 760,6 | 834,4 | 834,4 | 834,4 | 800,4 | 549,2 | 549,2 | 489,2 | 834,4 | 834,4 |
| Zulauf 1 | | | | | | | | | | | |
| I: Styrol | --- | 400 | --- | 400 | 392 | --- | --- | 280 | --- | 160 | 280 |
| n-Butylacrylat | 400 | --- | 560 | 160 | 152 | 792 | 280 | --- | 260 | 400 | 280 |
| Methacrylsäure | --- | --- | --- | --- | --- | --- | --- | --- | 20 | --- | --- |
| Acrylsäure | --- | --- | --- | --- | 16 | --- | --- | --- | --- | --- | --- |
| II:Stearylacrylat | 360 | 160 | --- | --- | --- | --- | --- | --- | --- | --- | --- |
| Foral 85 E | --- | --- | --- | --- | --- | --- | 120 | 120 | 80 | --- | --- |
| PnBA | --- | --- | 64 | 64 | 64 | 144 | --- | --- | | 64 | 64 |
| Zulauf 2 | | | | | | | | | | | |
| Wasser | 150 | 150 | 150 | 150 | 150 | 150 | 75 | 75 | 75 | 150 | 150 |
| Natriumperoxodisulfat | 9 | 4 | 4 | 4 | 4 | 9 | 2 | 2 | 2 | 4 | 4 |

| | D5 | D6 | D7 | D8 | D9 | D10 | D11 | D12 | D13 | D14 | D15 |
|---|---|---|---|---|---|---|---|---|---|---|---|
| | | | | | | | | | | | |
| | | | | | | | | | | | |
| Zulauf II | | | | | | | | | | | |
| n-Butylacrylat | 1040 | --- | 240 | 240 | 240 | 1008 | 120 | --- | 120 | --- | 120 |
| Styrol | --- | 240 | --- | --- | --- | --- | --- | 120 | --- | 240 | 120 |
| | | | | | | | | | | | |
| FG | 59,2 | 38,5 | 39,5 | 39,3 | 38,8 | 59,4 | 38,7 | 39,2 | 39,1 | 38,8 | 38,8 |
| pH | 2,1 | 4,3 | 2,6 | 2,9 | 3,3 | 2,4 | 4,3 | 5,2 | 4,2 | 3,4 | 3,6 |
| LD | 38 | 58 | 60 | 41 | 50 | 36 | 56 | 29 | 58 | 36 | 37 |
| $\bar{\bar{d}}_z$ (Emulsion I) | 219 | 160 | 176 | 214 | 173 | 225 | 183 | 185 | 158 | 204 | 207 |
| $\bar{\bar{d}}_z$ (Dispersion) | 267 | 147 | 254 | 231 | 209 | 275 | 234 | 206 | 247 | 235,2 | 227,7 |
| KG | 5,1 | 1,6 | 0 | 0 | 0,1 | 0 | 0 | 0,1 | 0 | 0 | 0 |
| S | 3 | 2,0 | 3 | 2 | 2 | 2 | 1 | 2 | 2 | 2 | 2 |

## Patentansprüche

1. Verfahren zur Herstellung einer wäßrigen Polymerisatdispersion durch radikalisch initiierte Polymerisation von radikalisch polymerisierbaren Verbindungen deren individuelle Löslichkeit in Wasser unter den Bedingungen der radikalisch initiierten Polymerisation wenigstens 0,001 Gew.-%, bezogen auf die jeweilige gesättigte wäßrige Lösung, beträgt (Verbindungen I), deren dispergierte Polymerisatteilchen neben den Verbindungen I noch wenigstens eine Verbindung II, deren Löslichkeit in Wasser unter den Bedingungen der radikalisch initiierten Polymerisation weniger als 0,001 Gew.-%, bezogen auf die jeweilige gesättigte wäßrige Lösung beträgt, enthalten, bei dem man aus einem Gemisch, bestehend aus einer molaren Menge B der Verbindungen I und der wenigstens einen Verbindung II, eine Öl in Wasser Emulsion I erzeugt, deren disperse Phase hauptsächlich aus Tröpfchen eines Durchmessers ≤ 500 nm besteht und bei dem man dem Polymerisationsgefäß unter fortwährender radikalischer Polymerisation wenigstens einen Teil der wäßrigen Emulsion I als einen Zulauf I kontinuierlich zuführt, **dadurch gekennzeichnet**, daß man den kontinuierlichen Zulauf I durch wenigstens einen Zulauf II synchron begleitet, mit der Maßgabe, daß der wenigstens eine Zulauf II ein Zulauf einer molaren Menge A der Verbindungen I und/oder eine Öl in Wasser Emulsion II einer molaren Menge A der Verbindungen I ist, deren disperse Phase hauptsächlich aus Tröpfchen eines Durchmessers ≥ 1000 nm besteht und die molare Menge A 5 bis 300 % der molaren Menge B ist.

2. Verfahren nach Anspruch 1, **dadurch gekennzeichnet**, daß die Verbindungen I ausschließlich wenigstens eine ethylenisch ungesättigte Gruppe aufweisende Monomere sind.

3. Verfahren nach Anspruch 1, **dadurch gekennzeichnet**, daß die Verbindungen I ein Gemisch aus wenigstens eine ethylenisch ungesättigte Gruppe aufweisenden Monomeren und Molekulargewichtsreglern sind.

4. Verfahren nach Anspruch 1, **dadurch gekennzeichnet**, daß die Verbindungen I aus

| | |
|---|---|
| A) 80 bis 100 Gew.-Teilen | wenigstens eines Monomeren aus der Gruppe umfassend Styrol, α-Methylstyrol, Vinyltoluole, Ester aus 3 bis 6-C-Atome aufweisenden α,β-monoethylenisch ungesättigten Carbonsäuren und 1 bis 12 C-Atome aufweisenden Alkanolen, Butadien sowie Vinyl- und Allylester von 1 bis 12 C-Atome aufweisenden Alkancarbonsäuren (Monomere A) und |
| B) 0 bis 20 Gew.-Teilen | sonstigen,wenigstens eine ethylenisch ungesättigte Gruppe aufweisenden Verbindungen I (Monomere B) |

sowie gegebenenfalls 0,01 bis 2 Gew.-%, bezogen auf die Summe aus den Monomeren A und B, an das Molekulargewicht regelnden Verbindungen I bestehen.

5. Verfahren nach Anspruch 4, **dadurch gekennzeichnet**, daß die Monomeren A ausgewählt sind aus der Gruppe, umfassend n-Butylacrylat, 2-Ethylhexylacrylat, Methylmethacrylat und Styrol.

6. Verfahren nach Anspruch 4 oder 5, **dadurch gekennzeichnet**, daß die Monomeren B ausgewählt sind aus der Gruppe, umfassend Acrylamid, Methacrylamid, Acrylsäure, Acrylnitril, Methacrylnitril, 2-Acrylamido-2-methylpropansulfonsäure, Vinylpyrrolidon, Hydroxyethylacrylat, Hydroxymethylacrylat, Hydroxypropylacrylat, Hydroxypropylmethyacrylat, quaternisiertes Vinylimidazol, N,N-Dialkylaminoalkyl(meth)acrylat, N,N-Dialkylaminoalkyl(meth) acrylamid, Trialkylammoniumalkyl(meth)acrylat und Trialkylammoniumalkyl(meth)acrylamid.

7. Verfahren nach Anspruch 1, **dadurch gekennzeichnet**, daß die Verbindungen I zu 70 bis 100 Gew.-% aus Estern der Acryl- und/oder Methacrylsäure mit 1 bis 12 C-Atome aufweisenden Alkanolen und/oder Styrol zusammengesetzt sind.

8. Verfahren nach Anspruch 1, **dadurch gekennzeichnet**, daß die Verbindungen I zu 70 bis 100 Gew.-% aus Styrol und/oder Butadien zusammengesetzt sind.

9. Verfahren nach Anspruch 1, **dadurch gekennzeichnet**, daß die Verbindungen I zu 70 bis 100 Gew.-% aus Vinylchlorid und/oder Vinylidenchlorid zusammengesetzt sind.

10. Verfahren nach Anspruch 1, **dadurch gekennzeichnet**, daß die Verbindungen I zu 40 bis 100 Gew.-% aus Vinylacetat, Vinylpropionat und/oder Ethylen zusammengesetzt sind.

**11.** Verfahren nach einem der Ansprüche 1 bis 10, **dadurch gekennzeichnet**, daß die Verbindungen II wenigstens eine monoethylenisch ungesättigte Gruppe aufweisen.

**12.** Verfahren nach Anspruch 11, **dadurch gekennzeichnet**, daß die Verbindungen II ausgewählt sind aus der Gruppe, umfassend Ester aus 3 bis 6 C-Atome aufweisenden $\alpha,\beta$-monoethylenisch ungesättigten Carbonsäuren und mehr als 12 C-Atome aufweisenden Alkanolen, Ester aus Vinylalkohol oder Allylalkohol und mehr als 12 C-Atome aufweisenden Alkancarbonsäuren und Makromonomere.

**13.** Verfahren nach einem der Ansprüche 1 bis 10, **dadurch gekennzeichnet**, daß die Verbindungen II keine monoethylenisch ungesättigte Gruppe aufweisen.

**14.** Verfahren nach einem der Ansprüche 1 bis 10, **dadurch gekennzeichnet**, daß die Verbindungen II ein Gemisch sind aus wenigstens eine monoethylenisch ungesättigte Gruppe aufweisenden Verbindungen II und keine monoethylenisch ungesättigte Gruppe aufweisenden Verbindungen II.

**15.** Verfahren nach einem der Ansprüche 1 bis 10, **dadurch gekennzeichnet**, daß die Verbindungen II Molekulargewichtsregler umfassen.

**16.** Verfahren nach einem der Ansprüche 1 bis 15, **dadurch gekennzeichnet**, daß $\bar{d}_z$ der Tröpfchen der wäßrigen Emulsion I $\leq$ 500 nm beträgt.

**17.** Verfahren nach einem der Ansprüche 1 bis 15, **dadurch gekennzeichnet**, daß $\bar{d}_z$ der Tröpfchen der wäßrigen Emulsion I 40 nm bis 400 nm beträgt.

**18.** Verfahren nach einem der Ansprüche 1 bis 15, **dadurch gekennzeichnet**, daß $\bar{d}_z$ der Tröpfchen der wäßrigen Emulsion I 100 nm bis 300 nm beträgt.

**19.** Verfahren nach einem der Ansprüche 1 bis 15, **dadurch gekennzeichnet**, daß $\bar{d}_z$ der Tröpfchen der wäßrigen Emulsion I 100 nm bis 200 nm beträgt.

**20.** Verfahren nach einem der Ansprüche 1 bis 19, **dadurch gekennzeichnet**, daß die wäßrige Emulsion I, bezogen auf die enthaltenen Verbindungen I, wenigstens 0,5 Gew.-% an Verbindungen II aufweist.

**21.** Verfahren nach einem der Ansprüche 1 bis 19, **dadurch gekennzeichnet**, daß die wäßrige Emulsion I, bezogen auf die enthaltenen Verbindungen I, 1 bis 200 Gew.-% an Verbindungen II aufweist.

**22.** Verfahren nach einem der Ansprüche 1 bis 19, **dadurch gekennzeichnet**, daß die wäßrige Emulsion I, bezogen auf die enthaltenen Verbindungen I, 2 bis 100 Gew.-% an Verbindungen II aufweist.

**23.** Verfahren nach einem der Ansprüche 1 bis 22, **dadurch gekennzeichnet**, daß die im Zulauf II enthaltenen Verbindungen I so ausgewählt sind, daß ihre individuelle molale Löslichkeit in Wasser unter den Polymerisationsbedingungen größer ist als die entsprechende Wasserlöslichkeit der unter Polymerisationsbedingungen am schlechtesten wasserlöslichen Verbindung I der wäßrigen Emulsion I.

**24.** Verfahren nach einem der Ansprüche 1 bis 23, **dadurch gekennzeichnet**, daß die individuelle Löslichkeit der im Zulauf II enthaltenen Verbindungen I unter den Polymerisationsbedingungen in Wasser schlechter ist, als in den dispers verteilten Tröpfchen der wäßrigen Emulsion I.

**25.** Verfahren nach einem der Ansprüche 1 bis 24, **dadurch gekennzeichnet**, daß der Zulauf II ausschließlich aus Verbindungen I besteht.

**26.** Verfahren nach einem der Ansprüche 1 bis 25, **dadurch gekennzeichnet**, daß die molare Gesamtmenge an Verbindungen I, die als Bestandteil des Zulaufs II eingesetzt werden (molare Menge A), größer als die molare Gesamtmenge an Verbindungen I ist, die als Bestandteil der wäßrigen Emulsion I eingesetzt werden (molare Menge B).

**27.** Verfahren nach einem der Ansprüche 1 bis 25, **dadurch gekennzeichnet**, daß die molare Gesamtmenge an Verbindungen I, die als Bestandteil des Zulaufs II eingesetzt werden (molare Menge A), kleiner oder gleich der

molaren Gesamtmenge an Verbindungen I ist, die als Bestandteil der wäßrigen Emulsion I eingesetzt werden (molare Menge B).

**28.** Verfahren nach einem der Ansprüche 1 bis 27, **dadurch gekennzeichnet**, daß man ins Polymerisationsgefäß Wasser vorlegt, das vorgelegte Wasser auf die Polymerisationstemperatur erwärmt und anschließend über räumlich getrennte Zuläufe die wäßrige Emulsion I, den radikalischen Polymerisationsinitiator sowie den Zulauf II dem Polymerisationsgefäß unter Aufrechterhaltung der Polymerisation kontinuierlich zuführt.

**29.** Verfahren nach einem der Ansprüche 1 bis 27, **dadurch gekennzeichnet**, daß man, gegebenenfalls unter Zusatz von Wasser, bis zu 50 Gew.-% der wäßrigen Emulsion I ins Polymerisationsgefäß vorlegt, die Vorlage auf die Polymerisationstemperatur erwärmt, radikalischen Polymerisationsinitiator zusetzt, das resultierende Gemisch anpolymerisiert und anschließend die Restmenge der wäßrigen Emulsion I unter Aufrechterhaltung der Polymerisation kontinuierlich ins Polymerisationsgefäß zuführt und diese Zufuhr durch eine vorzugsweise kontinuierliche Zufuhr an Polymerisationsinitiator sowie eine vorzugsweise synchrone Zufuhr des Zulaufs II begleitet.

**30.** Verfahren nach einem der Ansprüche 1 bis 29, **dadurch gekennzeichnet**, daß als radikalischer Polymerisationsinitiator ein solcher verwendet wird, der sich überwiegend in der wäßrigen Phase löst.

## Claims

**1.** A process for preparing an aqueous polymer dispersion by free-radically initiated polymerization of free-radically polymerizable compounds whose individual solubility in water under the conditions of the free-radically initiated polymerization is at least 0.001 % by weight, based on the respective saturated aqueous solution (compounds I), whose disperse polymer particles comprise, in addition to the compounds I, at least one compound II whose solubility in water under the conditions of the free-radically initiated polymerization is less than 0.001 % by weight, based on the respective saturated aqueous solution, and in which process a mixture consisting of a molar amount B of the compounds I and of the at least one compound II is used to produce an oil-in-water emulsion I whose disperse phase consists predominantly of droplets with a diameter ≤ 500 nm, and in which at least a portion of the aqueous emulsion I is supplied continuously as a feed stream I to the polymerization vessel in the course of continuing free-radical polymerization, wherein the continuous feed stream I is synchronously accompanied by at least one feed stream II, with the proviso that the at least one feed stream II is a feed stream of a molar amount A of the compounds I and/or is an oil-in-water emulsion II of a molar amount A of the compounds I, whose disperse phase consists predominantly of droplets with a diameter ≥ 1000 nm, and the molar amount A is 5 to 300% of the molar amount B.

**2.** A process as claimed in claim 1, wherein the compounds I are exclusively monomers containing at least one ethylenically unsaturated group.

**3.** A process as claimed in claim 1, wherein the compounds I are a mixture of molecular weight regulators and monomers comprising at least one ethylenically unsaturated group.

**4.** A process as claimed in claim 1, wherein the compounds I consist of

| | |
|---|---|
| A) from 80 to 100 parts by weight | of at least one monomer from the group consisting of styrene, α-methylstyrene, vinyltoluenes, esters of α,β-monoethylenically unsaturated $C_3$-$C_6$ carboxylic acides and $C_1$-$C_{12}$ alkanols, butadiene, and vinyl esters and allyl esters of $C_1$-$C_{12}$ alkanecarboxylic acids (monomers A), and |
| B) from 0 to 20 parts by weight | of other compounds I, containing at least one ethylenically unsaturated group (monomers B) |

and, if desired, from 0.01 to 2 % by weight, based on the sum of the monomers A and B, of molecular weight regulators I.

**5.** A process as claimed in claim 4, wherein the monomers A are selected from the group consisting of n-butyl acrylate, 2-ethylhexyl acrylate, methyl methacrylate and styrene.

6. A process as claimed in claim 4 or 5, wherein the monomers B are selected from the group consisting of acrylamide, methacrylamide, acrylic acid, acrylonitrile, methacrylonitrile, 2-acrylamido-2-methylpropanesulfonic acid, vinylpyrrolidone, hydroxyethyl acrylate, hydroxymethyl hydroxypropyl acrylate, hydroxypropyl methacrylate, quaternized vinylimidazole, N,N-dialkylaminoalkyl (meth)acrylate, N,N-dialkylaminoalkyl(meth)acrylamide, trialkylammoniumalkyl (meth)acrylate and trialkylammoniumalkyl(meth)acrylamide.

7. A process as claimed in claim 1, wherein the compounds I are composed of from 70 to 100 % by weight of esters of acrylic and/or methacrylic acid with $C_1$-$C_{12}$ alkanols and/or styrene.

8. A process as claimed in claim 1, wherein the compounds I are composed of from 70 to 100 % by weight of styrene and/or butadiene.

9. A process as claimed in claim 1, wherein the compounds I are composed of from 70 to 100 % by weight of vinyl chloride and/or vinylidene chloride.

10. A process as claimed in claim 1, wherein the compounds I are composed of from 40 to 100 % by weight of vinyl acetate, vinyl propionate and/or ethylene.

11. A process as claimed in any of claims 1 to 10, wherein the compounds II contain at least one monoethylenically unsaturated group.

12. A process as claimed in claim 11, wherein the compounds II are selected from the group consisting of esters of $\alpha,\beta$-monoethylenically unsaturated $C_3$-$C_6$ carboxylic acids and alkanols having more than 12 carbon atoms, esters of vinyl alcohol or allyl alcohol and alkanecarboxylic acids having more than 12 carbon atoms, and macromonomers.

13. A process as claimed in any of claims 1 to 10, wherein the compounds II contain no monoethylenically unsaturated group.

14. A process as claimed in any of claims 1 to 10, wherein the compounds II are a mixture of compounds II containing at least one monoethylenically unsaturated group and compounds II containing no monoethylenically unsaturated group.

15. A process as claimed in any of claims 1 to 10, wherein the compounds II comprise molecular weight regulators.

16. A process as claimed in any of claims 1 to 15, wherein $\bar{d}_z$ of the droplets of the aqueous emulsion I is $\leq$ 500 nm.

17. A process as claimed in any of claims 1 to 15, wherein $\bar{d}_z$ of the droplets of the aqueous emulsion I is from 40 nm to 400 nm.

18. A process as claimed in any of claims 1 to 15, wherein $\bar{d}_z$ of the droplets of the aqueous emulsion I is from 100 nm to 300 nm.

19. A process as claimed in any of claims 1 to 15, wherein $\bar{d}_z$ of the droplets of the aqueous emulsion I is from 100 nm to 200 nm.

20. A process as claimed in any of claims 1 to 19, wherein the aqueous emulsion I, based on the compounds II present, contains at least 0.5 % by weight of compounds II.

21. A process as claimed in any of claims 1 to 19, wherein the aqueous emulsion I, based on the compounds I present, contains from 1 to 200 % by weight of compounds II.

22. A process as claimed in any of claims 1 to 19, wherein the aqueous emulsion I, based on the compounds I present, contains from 2 to 100 % by weight of compounds II.

23. A process as claimed in any of claims 1 to 22, wherein the compounds I present in the feed stream II are selected such that their individual molal solubility in water under the polymerization conditions is greater than the corresponding water-solubility of that compound I of the aqueous emulsion I that is the least soluble in water under

polymerization conditions.

**24.** A process as claimed in any of claims 1 to 23, wherein the individual solubility in water, under the polymerization conditions, of the compounds I present in the feed stream II is poorer than in the dispersed droplets of the aqueous emulsion I.

**25.** A process as claimed in any of claims 1 to 24, wherein the feed stream II consists exclusively of compounds I.

**26.** A process as claimed in any of claims 1 to 25, wherein the overall molar amount of compounds I that are employed as a constituent of the feed stream II (molar amount A) is greater than the overall molar amount of compounds I that are employed as a constituent of the aqueous emulsion I (molar amount B).

**27.** A process as claimed in any of claims 1 to 25, wherein the overall molar amount: of compounds I that are employed as a constituent of the feed stream II (molar amount A) is less than or equal to the overall molar amount of compounds I that are employed as a constituent of the aqueous emulsion I (molar amount B).

**28.** A process as claimed in any of claims 1 to 27, wherein water is charged to the polymerization vessel, the initial charge of water is heated to the polymerization temperature, and then, by way of spatially separate feeds, the aqueous emulsion I, the free-radical polymerization initiator and the feed stream II are supplied continuously to the polymerization vessel while the polymerization is maintained.

**29.** A process as claimed in any of claims 1 to 27, wherein, with or without the addition of water, up to 50 % by weight of the aqueous emulsion I is charged to the polymerization vessel, the initial charge is heated to the polymerization temperature, free-radical polymerization initiator is added, the resulting mixture is partially polymerized, and then the remainder of the aqueous emulsion I is supplied continuously to the polymerization vessel, while the polymerization is maintained, and this supply is accompanied by a preferably continuous supply of polymerization initiator and by a preferably synchronous supply of the feed stream II.

**30.** A process as claimed in any of claims 1 to 29, wherein a free-radical polymerization initiator is used which predominantly dissolves in the aqueous phase.

## Revendications

**1.** Procédé pour la préparation d'une dispersion polymère aqueuse par polymérisation déclenchée par voie radicalaire de composés aptes à une polymérisation radicalaire dont la solubilité individuelle dans l'eau dans les conditions de la polymérisation déclenchée par voie radicalaire s'élève à au moins 0,001 % en poids, rapporté à la solution aqueuse saturée respective (composés I), dont les particules polymères dispersées contiennent, outre les composés I, encore au moins un composé II dont la solubilité dans l'eau dans les conditions de la polymérisation déclenchée par voie radicalaire est inférieure à 0,001 % en poids, rapporté à la solution aqueuse saturée respective, dans lequel, à partir d'un mélange constitué par une quantité molaire B des composés I et du au moins un composé II, on obtient une émulsion I du type huile dans l'eau dont la phase dispersée est constituée principalement par des gouttelettes dont le diamètre est ≤ 500 nm, et dans lequel on achemine en continu dans le récipient de polymérisation tout en poursuivant la polymérisation radicalaire, au moins une partie de l'émulsion aqueuse I sous la forme d'une addition I, **caractérisé en ce qu**'on accompagne de manière synchrone l'aiddition I en continu d'au moins une addition II, avec cette mesure, que la au moins une addition II représente une addition d'une quantité molaire A des composés I et/ou une émulsion II du type huile dans l'eau d'une quantité molaire A des composés I, dont la phase dispersée est constituée principalement par des gouttelettes dont le diamètre est ≥ 1000 nm et la quantité molaire A représente de 5 à 300 % de la quantité molaire B.

**2.** Procédé selon la revendication 1, **caractérisé en ce que** les composés I représentent à titre exclusif des monomères présentant au moins un groupe à insaturation éthylénique.

**3.** Procédé selon la revendication 1, **caractérisé en ce que** les composés I représentent un mélange de monomères présentant au moins un groupe à insaturation éthylénique et de régulateurs du poids moléculaire.

**4.** Procédé selon la revendication 1, **caractérisé en ce que** les composés I sont constitués par

A) à concurrence de 80 à 100 parties en poids,

au moins un monomère choisi parmi le groupe comprenant le styrène, l'α-méthylstyrène, des vinyltoluènes, des esters d'acides carboxyliques à insaturation monoéthylénique α,β présentant de 3 à 6 atomes die carbone et des alcanols présentant de 1 à 12 atomes de carbone, le butadiène, ainsi que des esters vinyliques et allyliques d'acides alcanecarboxyliques présentant de 1 à 12 atomes de carbone (monomères A), et

B) à concurrence de 0 à 20 parties en poids,

d'autres composés I présentant au moins un groupe à insaturation éthylénique (monomères B)

ainsi que, le cas échéant, à concurrence de 0,01 à 2 % en poids, rapportés à la somme des monomères A et B, des composés I réglant le poids moléculaire.

**5.** Procédé selon la revendication 4, **caractérisé en ce que** les monomères A sont choisis parmi le groupe comprenant l'acrylate de n-butyle, l'acrylate de 2-éthylhexyle, le méthacrylate de méthyle et le styrène.

**6.** Procédé selon la revendication 4 ou 5, **caractérisé en ce que** les monomères B sont choisis parmi le groupe comprenant l'acrylamide, le méthacrylamide, l'acide acrylique, l'acrylonitrile, le méthacrylonitrile, l'acide 2-acrylamido-2-méthylpropanesulfonique, la vinylpyrrolidone, l'acrylate d'hydroxyéthyle, l'acrylate d'hydroxyméthyle, l'acrylate d'hydroxypropyle, le méthacrylate d'hydroxypropyle, le vinylimidazole quaternisé, le (méth)acrylate de N,N-dialkylaminoalkyle, le (méth)acrylamide de dialkylaminoalkyle, le (méth)acrylate de trialkylammoniumalkyle et le (méth)acrylamide de trialkylammoniumalkyle.

**7.** Procédé selon la revendication 1, **caractérisé en ce que** les composés I sont constitués, à concurrence de 70 à 100 % en poids, par des esters de l'acide acrylique et/ou de l'acide méthacrylique avec des alcanols présentant de 1 à 12 atomes de carbone et/ou du styrène.

**8.** Procédé selon la revendication 1, **caractérisé en ce que** les composés I sont constitués, à concurrence de 70 à 100 % en poids, par du styrène et/ou du butadiène.

**9.** Procédé selon la revendication 1, **caractérisé en ce que** les composés I sont constitués, à concurrence de 70 à 100 % en poids, par du chlorure de vinyle et/ou du chlorure de vinylidène.

**10.** Procédé selon la revendication 1, **caractérisé en ce que** les composés I sont constitués, à concurrence de 40 à 100 % en poids, par de l'acétate de vinyle, du propionate de vinyle et/ou de l'éthylène.

**11.** Procédé selon l'une quelconque des revendications 1 à 10, **caractérisé en ce que** les composés II présentent au moins un groupe à insaturation monoéthylénique.

**12.** Procédé selon la revendication 11, **caractérisé en ce que** les composés II sont choisis parmi le groupe comprenant des esters d'acides carboxyliques à insaturation monoéthylénique α,β présentant de 3 à 6 atomes de carbone et des alcanols présentant plus de 12 atomes de carbone, des esters d'alcool vinylique ou d'alcool allylique et d'acides alcanecarboxyliques présentant plus de 12 atomes de carbone et des macromonomères.

**13.** Procédé selon l'une quelconque des revendications 1 à 10, **caractérisé en ce que** les composés II ne présentent pas de groupe à insaturation monoéthylénique.

**14.** Procédé selon l'une quelconque des revendications 1 à 10, **caractérisé en ce que** les composés II représentent un mélange de composés II présentant au moins un groupe à insaturation monoéthylénique et de composés II ne présentant pas de groupe à insaturation monoéthylénique.

**15.** Procédé selon l'une quelconque des revendications 1 à 10, **caractérisé en ce que** les composés II comprennent des régulateurs du poids moléculaire.

**16.** Procédé selon l'une quelconque des revendications 1 à 15, **caractérisé en ce que** le $\bar{d}_z$ des gouttelettes de l'émulsion aqueuse I s'élève à ≤ 500 nm.

**17.** Procédé selon l'une quelconque des revendications 1 à 15, **caractérisé en ce que** le $\bar{d}_z$ des gouttelettes de l'émulsion aqueuse I s'élève de 40 nm à 400 nm.

**18.** Procédé selon l'une quelconque des revendications 1 à 15, **caractérisé en ce que** le $\bar{d}_z$ des gouttelettes de l'émulsion aqueuse I s'élève de 100 nm à 300 nm.

**19.** Procédé selon l'une quelconque des revendications 1 à 15, **caractérisé en ce que** le $\bar{d}_z$ des gouttelettes de l'émulsion aqueuse I s'élève de 100 nm à 200 nm.

**20.** Procédé selon l'une quelconque des revendications 1 à 19, **caractérisé en ce que** l'émulsion aqueuse I présente, rapporté aux composés I qu'elle contient, des composés II à concurrence d'au moins 0,5 % en poids.

**21.** Procédé selon l'une quelconque des revendications 1 à 19, **caractérisé en ce que** l'émulsion aqueuse I présente, rapporté aux composés I qu'elle contient, des composés II à concurrence de 1 à 200 % en poids.

**22.** Procédé selon l'une quelconque des revendications 1 à 19, **caractérisé en ce que** l'émulsion aqueuse I présente, rapporté aux composés I qu'elle contient, des composés II à concurrence de 2 à 100 % en poids.

**23.** Procédé selon l'une quelconque des revendications 1 à 22, **caractérisé en ce que** les composés I contenus dans l'addition II sont choisis de telle sorte que leur solulbilité molale individuelle dans de l'eau dans les conditions de la polymérisation est supérieure à la solubilité dans l'eau correspondante du composé I de l'émulsion aqueuse I le moins soluble dans l'eau dans les conditions de la polymérisation.

**24.** Procédé selon l'une quelconque des revendications 1 à 23, **caractérisé en ce que** la solubilité individuelle des composés I contenus dans l'addition II est inférieure dans l'eau, dans les conditions de la polymérisation, à celle des gouttelettes de l'émulsion aqueuse I, distribuées de manière dispersée.

**25.** Procédé selon l'une quelconque des revendications 1 à 24, **caractérisé en ce que** l'addition II est constituée exclusivement par des composés I.

**26.** Procédé selon l'une quelconque des revendications 1 à 25, **caractérisé en ce que** la quantité molaire des composés II qui sont mis en oeuvre à titre de constituant de l'addition II (quantité molaire A) est supérieure à la quantité totale molaire des composés I qui sont mis en oeuvre à titre de constituant de l'émulsion aqueuse I (quantité molaire B).

**27.** Procédé selon l'une quelconque des revendications 1 à 25, **caractérisé en ce que** la quantité molaire des composés I qui sont mis en oeuvre à titre de constituant de l'addition II (quantité molaire A) est inférieure ou égale à la quantité totale molaire des composants I qui sont mis en oeuvre à titre de constituant de l'émulsion aqueuse I (quantité molaire B).

**28.** Procédé selon l'une quelconque des revendications 1 à 27, **caractérisé en ce qu'**on dépose de l'eau au préalable dans le récipient de polymérisation, on chauffe l'eau déposée au préalable à la température de polymérisation, puis on achemine en continu, via des additions séparées dans l'espace, l'émulsion aqueuse I, l'initiateur radicalaire de la polymérisation ainsi que l'addition II au récipient de polymérisation, tout en maintenant la polymérisation.

**29.** Procédé selon l'une quelconque des revendications 1 à 27, **caractérisé en ce que**, le cas échéant en ajoutant de l'eau, on dépose au préalable dans le récipient de polymérisation l'émulsion aqueuse I jusqu'à concurrence de 50 % en poids, on réchauffe le contenu à la température de polymérisation, on ajoute l'initiateur radicalaire de la polymérisation, on déclenche la polymérisation du mélange résultant et on achemine ensuite en continu dans le récipient de polymérisation la quantité résiduelle de l'émulsion aqueuse I tout en maintenant la polymérisation, et on accompagne cette alimentation par une alimentation de préférence en continu de l'initiateur de la polymérisation ainsi que d'une alimentation de préférence synchrone de l'addition II.

**30.** Procédé selon l'une quelconque des revendications 1 à 29, **caractérisé en ce qu'**on utilise, à titre de l'initiateur radicalaire de la polymérisation, un initiateur qui se dissout principalement dans la phase aqueuse.